(19) **Europäisches Patentamt / European Patent Office / Office européen des brevets**

(11) **EP 3 460 563 A1**

(12) **EUROPÄISCHE PATENTANMELDUNG**

(43) Veröffentlichungstag:
**27.03.2019 Patentblatt 2019/13**

(51) Int Cl.:
**G02F 1/11** (2006.01)    **G02F 1/33** (2006.01)

(21) Anmeldenummer: **18192861.5**

(22) Anmeldetag: **06.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.09.2017 DE 102017121926**

(71) Anmelder: **Leica Microsystems CMS GmbH**
**35578 Wetzlar (DE)**

(72) Erfinder:
• **FRIEDRICH, Lars**
**69469 Weinheim (DE)**
• **MRAWEK, Patric**
**67454 Hassloch (DE)**

(74) Vertreter: **m patent group**
**Postfach 33 04 29**
**80064 München (DE)**

(54) **VERFAHREN UND EINE VORRICHTUNG ZUR ANSTEUERUNG EINES AKUSTO-OPTISCHEN ELEMENTS**

(57) Die vorliegende Erfindung betrifft ein Verfahren und eine Vorrichtung zur Ansteuerung eines akusto-optischen Elements (106) mit einem akusto-optischen Kristall (107) und einem piezoelektrischen Wandler (105) zur Versetzung des akusto-optischen Kristalls (107) in mechanische Schwingungen. Der piezoelektrische Wandler (105) wird gleichzeitig mit wenigstens zwei verschiedenen Frequenzen angeregt. Der piezoelektrische Wandler (105) wird zusätzlich mit wenigstens einer Mischfrequenz aus den wenigstens zwei verschiedenen Frequenzen angeregt. Des Weiteren betrifft die vorliegende Erfindung Verfahren ein Mikroskop.

$$S_3(t) = A_3 \sin((2\omega_2 - \omega_1)t + \varphi_3)$$

Figur 3

**Beschreibung**

Die vorliegende Erfindung betrifft ein Verfahren und eine Vorrichtung zur Ansteuerung eines akusto-optischen Elements und ein Mikroskop mit einer solchen Vorrichtung.

Stand der Technik

Eine wesentliche Herausforderung bei zahlreichen Mikroskopen ist, unabhängig vom eingesetzten Verfahren, die Bereitstellung von Anregungslicht mit einer oder mehreren vorgegebenen Wellenlängen. Je nach Art des Mikroskopieverfahrens und/oder nach Art der Probe sind dabei ein oder mehrere Anregungslichtstrahlen erforderlich, welche in der Regel vorgegebene spektrale Eigenschaften aufweisen müssen.

Zur Bereitstellung solchen Lichts können wellenlängenselektive Elemente zum Einsatz kommen, welche auf dem akusto-optischen Effekt basieren. Derartige akusto-optische Elemente weisen in der Regel einen sogenannten akusto-optischen Kristall auf, welcher mittels eines akustischen Signalgebers, auch als Wandler oder "Transducer" bezeichnet, in Schwingung versetzt wird. In der Regel weist ein derartiger Wandler ein piezoelektrisches Material sowie zwei oder mehrere dieses Material kontaktierende Elektroden auf. Durch elektrisches Beschalten der Elektroden mit Hochfrequenzen, die typischerweise im Bereich zwischen 10 MHz und 10 GHz liegen, wird das piezoelektrische Material zum Schwingen angeregt, so dass eine akustische Welle entstehen kann, die den Kristall durchläuft. Akusto-optische Kristalle zeichnen sich dadurch aus, dass die entstehende Schallwelle die optischen Eigenschaften des Kristalls verändert.

Beispiele für solche akusto-optischen Elemente sind akusto-optische abstimmbare Filter (AOTF), akusto-optische Modulatoren (AOM), akusto-optische Ablenker (AOD), akusto-optische Strahlteiler (AOBS) und akusto-optische Strahlvereiniger (AOBM).

Eine besondere Herausforderung bei der Verwendung von akusto-optischen Elementen stellt deren Ansteuerung dar. Beispielsweise kann mittels eines sinusförmigen Ansteuersignals ein optisches Gitter erzeugt werden, das in den Dichteschwankungen einer einen Kristall durchlaufenden Schallwelle besteht. An diesem optischen Gitter wird eine bestimmte, zur Ansteuerfrequenz passende Wellenlänge eines Lichtstrahls in dem Kristall gebeugt. Zu jeder Frequenz der angelegten elektrischen Schwingung gibt es eine korrespondierende optische Wellenlänge, bei der der Kristall Licht beugt. Bei mehreren gleichzeitig angelegten, unterschiedlichen Ansteuerfrequenzen können Lichtstrahlen mehrerer Wellenlängen gleichzeitig (beispielsweise bei einem AOTF, AOBS, AOBM, AOM) beziehungsweise eine Wellenlänge eines einfallenden Lichtstrahls in mehrere Lichtstrahlen verschiedener Richtungen gleichzeitig (beispielsweise bei einem AOD) abgelenkt werden.

Die Kennlinie eines piezoelektrischen Wandlers weist insbesondere bei größeren elektrischen Amplituden jedoch ein nicht vernachlässigbares Sättigungsverhalten auf, das zu einer Nichtlinearität führt. Üblicherweise werden zur Erzeugung des Beugungsgitters sinusförmige Schwingungen verwendet. Wird ein piezoelektrischer Wandlers mit einer solchen Schwingung beaufschlagt, entstehen zusätzlich zur Grundfrequenz der Schwingung aufgrund der Nichtlinearität zusätzliche Frequenzen bei Vielfachen der Grundfrequenz. Werden mehrere Schwingungen gleichzeitig eingebracht, entstehen weitere Mischfrequenzen. Unter Mischfrequenzen im Sinn des vorliegenden Dokuments können insbesondere alle Linearkombinationen der Grundfrequenzen verstanden werden. Wird z.B. ein AOTF benutzt, um aus einem kontinuierlichen Spektrum zwei Wellenlängen zu selektieren, können aufgrund der Nichtlinearität des piezoelektrischen Wandlers im gebeugten Lichtstrahl weitere unerwünschte Wellenlängen erscheinen.

Eine mögliche Lösung dieses Problems besteht darin, die nichtlineare Kennlinie des piezoelektrischen Wandlers zu kompensieren, indem das Ursprungssignal, welches an den piezoelektrischen Wandler angelegt wird, derart vorverzerrt wird, das man ein lineares Ausgangssignal erhält.

Durch eine solche Vorverzerrung entstehen zusätzliche Frequenzanteile bei Vielfachen der Grundfrequenzen und bei sämtlichen Mischfrequenzen.

Ein Blick auf den Aufbau und die Funktionsweise von piezoelektrischen Wandlern zeigt jedoch, dass eine solche Vorverzerrung nachteilig ist. So kann man piezoelektrische Wandler als Kapazitäten sehen, die nur einen kleinen Anteil an Wirkleistung aufnehmen. Ein erheblicher Anteil der zugeführten Leistung wird zur Quelle zurück reflektiert. Dies ist insbesondere in dem Frequenzbereich, in dem übliche akusto-optische Kristalle betrieben werden, der Fall.

Üblicherweise werden zwischen piezoelektrischen Wandler und Signalerzeugungseinrichtung Anpassnetzwerke eingebracht. Diese Netzwerke bestehen aus Spulen und Kondensatoren und transformieren die Impedanz des piezoelektrischen Wandlers in eine Impedanz, deren Realteil näher an der Ausgangsimpedanz der Signalerzeugungseinrichtung liegt als die Impedanz des piezoelektrischen Wandlers ohne Anpassnetzwerk. Eine solche Impedanzanpassung ist nur in einem beschränkten Frequenzbereich möglich. Bei üblichen akusto-optischen Kristallen ist etwa eine Oktave möglich.

Daraus wird ersichtlich, dass das oben beschrieben Vorverzerrungsverfahren durch das Anpassnetzwerk verhindert wird. Die durch die Vorverzerrung erzeugten Zusatzfrequenzen liegen außerhalb der Bandbreite des Anpassnetzwerks und können nicht an den piezoelektrischen Wandler gelangen.

Demzufolge ist es Aufgabe der vorliegenden Erfindung, einen piezoelektrischen Wandler in einem akusto-optischen Element derart anzusteuern, dass eine Ablenkung unerwünschter Lichtwellenlängen reduziert oder ganz vermieden wird.

Offenbarung der Erfindung

Erfindungsgemäß werden ein Verfahren und eine Vorrichtung zur Ansteuerung eines akusto-optischen Elements aufweisend einen piezoelektrischen Wandler und einen akusto-optischen Kristall und ein Mikroskop mit einer solchen Vorrichtung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung basiert auf der Maßnahme, dass, wenn der piezoelektrische Wandler gleichzeitig mit wenigstens zwei verschiedenen Frequenzen angeregt wird, er zusätzlich auch mit wenigstens einer Mischfrequenz aus den wenigstens zwei verschiedenen Frequenzen angeregt wird. Mit dieser zusätzlichen Mischfrequenz aus den wenigstens zwei verschiedenen Frequenzen kann eine Schwingung in derselben Mischfrequenz, in der der Kristall aufgrund der Nichtlinearität angeregt wird, gezielt kompensiert und reduziert werden. Bevorzugt wird der piezoelektrische Wandler derart mit der wenigstens einen Mischfrequenz aus den wenigstens zwei verschiedenen Frequenzen angeregt, dass eine Schwingung in derselben Mischfrequenz, in der der Kristall aufgrund der Nichtlinearität angeregt wird, reduziert oder ganz ausgelöscht wird.

Im Gegensatz zu einer Vorverzerrung des Ursprungssignals wird bei dem erfindungsgemäßen Verfahren lediglich gezielt eine Schwingung in der wenigstens einen Mischfrequenz angeregt. Diese Mischfrequenzen, die aus Linearkombinationen der wenigstens zwei Frequenzen bestehen und sehr nah bei den Grundfrequenzen liegen, sind die problematischsten Mischfrequenzen, da sie Licht im unmittelbaren Wellenlängenbereich der Grundfrequenzen beugen.

Die Erfindung beruht insbesondere darauf, diese Mischfrequenzen im unmittelbaren Frequenzbereich der Grundfrequenzen durch eine gezielte Einspeisung genau dieser Mischfrequenzen mit richtiger Phasenlage zu kompensieren.

In einer vorteilhaften Ausführungsform ist zwischen dem piezoelektrischen Wandler und einer Signalerzeugungseinrichtung ein Anpassnetzwerk angeordnet, das eine Impedanz des piezoelektrischen Wandlers in eine Impedanz transformiert, deren Realteil näher an einer Ausgangsimpedanz der Signalerzeugungseinrichtung liegt als der Realteil der Impedanz des piezoelektrischen Wandlers ohne Anpassnetzwerk. Dies ist vorteilhat, da auf diese Weise eine höhere Wirkleistung in den piezoelektrischen Wandler eingebracht werden kann.

Zweckmäßigerweise weist das Anpassnetzwerk wenigstens eine Induktivität und/oder wenigstens eine Kapazität auf. Auf diese Weise kann die Impedanz vorteilhaft wie gewünscht transformiert werden.

Bevorzugt liegt auch die wenigstens eine Mischfrequenz innerhalb eines Bereiches von der halben Frequenz der kleinsten der wenigstens zwei Frequenzen bis zu der doppelten Frequenz der größten der wenigstens zwei Frequenzen (mit anderen Worten jeweils eine Oktave unterhalb und oberhalb). Auf diese Weise befindet sich die wenigstens eine Mischfrequenz innerhalb der Bandbreite eines vorteilhaften Anpassnetzwerks.

In einer vorteilhaften Ausführungsform wird eine Amplitude der Anregung mit der wenigstens einen Mischfrequenz derart gewählt, dass sie genau oder im Wesentlichen einer Amplitude einer Schwingung in derselben wenigstens einen Mischfrequenz entspricht, in der der piezoelektrische Wandler aufgrund einer Nichtlinearität angeregt wird. Dadurch wird die Schwingung in derselben wenigstens einen Mischfrequenz bei entsprechender Phasenlage vorteilhaft zu einem Großteil kompensiert. 'Im Wesentlichen' bedeutet dabei bevorzugt, dass die Amplitude der Anregung der wenigstens einen Mischfrequenz zwischen 95% und 105% der Amplitude einer Schwingung in derselben wenigstens einen Mischfrequenz entspricht, in der der piezoelektrische Wandler aufgrund einer Nichtlinearität angeregt wird.

Zweckmäßigerweise wird eine Phase der Anregung mit der wenigstens einen Mischfrequenz derart gewählt wird, dass mindestens ein störender Frequenzanteil kompensiert wird und/oder dass sie genau oder im Wesentlichen gegenphasig zu einer Schwingung in derselben wenigstens einen Mischfrequenz ist, in der der piezoelektrische Wandler aufgrund einer Nichtlinearität angeregt wird. Dies ist vorteilhaft, da die Anregung mit der wenigstens einen Mischfrequenz auf diese Weise genau die Schwingung in derselben wenigstens einen Mischfrequenz kompensiert, in der der piezoelektrische Wandler aufgrund einer Nichtlinearität angeregt wird.

In einer weiteren vorteilhaften Ausführungsform wird der piezoelektrische Wandler mit mehr als einer Mischfrequenz aus den wenigstens zwei verschiedenen Frequenzen angeregt. Je nachdem wie eng die wenigstens zwei verschiedenen Frequenzen beieinander liegen und wie viele der wenigstens zwei verschiedenen Frequenzen vorhanden sind, können mehrere Mischfrequenzen relevant werden, da insbesondere Linearkombinationen aus den wenigstens zwei Frequenzen relevant sind, die sehr nah bei diesen Grundfrequenzen liegen, da diese Licht im unmittelbaren Wellenlängenbereich der Grundfrequenzen beugen.

Bevorzugt wird der piezoelektrische Wandler mit sämtlichen Mischfrequenzen innerhalb eines Bereiches von der halben einer kleinsten der wenigstens zwei Frequenzen bis zur doppelten einer größten der wenigstens zwei Frequenzen angeregt. Dies ist nicht beschränkend zu verstehen. So ist auch eine andere Auswahl der Mischfrequenzen denkbar. Jedoch befinden sich Mischfrequenzen, die einen maximalen Abstand von einer Oktave zu den wenigstens zwei Frequenzen aufweisen, innerhalb einer Bandbreite eines Anpassnetzwerks.

Bevorzugt ist das akusto-optische Element ausgewählt aus einem akusto-optisch abstimmbaren Filter, einem akusto-optischen Modulator (AOM), einem akusto-optischen Ablenker (AOD), einem akusto-optischen Strahlteiler (AOBS) und einem akusto-optischen Strahlvereiniger (AOBM). Insbesondere ein akusto-optisch abstimmbarer Filter (AOTF) eignet sich vorteilhaft für das erfindungsgemäße Verfahren.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

Figurenbeschreibung

Figur 1      zeigt einen Graphen mit einer Kennlinie eines piezoelektrischen Wandlers;

Figur 2      zeigt schematisch die Ablenkung eines Lichtstrahls mit einem kontinuierlichen Spektrum an einem akusto-optischen Filter;

Figur 3      zeigt schematisch die Ablenkung eines Lichtstrahls mit einem kontinuierlichen Spektrum an einem akusto-optischen Filter, wobei ein erfindungsgemäßes Verfahren durchgeführt wird;

Figur 4      zeigt schematisch eine Ausführungsform einer Vorrichtung zur Ansteuerung eines akusto-optischen Elements.

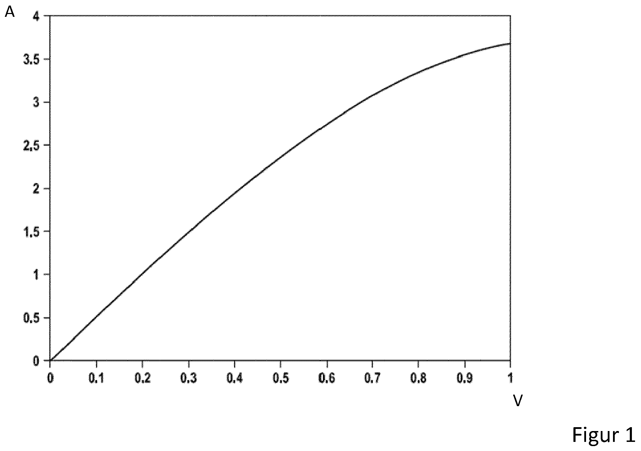

Figur 1 zeigt einen Graphen mit einer typischen Kennlinie eines piezoelektrischen Wandlers. Dabei ist beispielsweise eine in den Kristall eingekoppelte Schallamplitude A auf der Ordinate gegen eine am piezoelektrischen Wandler anliegende elektrische Spannung V auf der Abszisse aufgetragen. Es ist erkennbar, dass der Graph zunächst linear verläuft und dann in eine Sättigung übergeht.

Mathematisch kann das Sättigungsverhalten eines piezoelektrischen Wandlers beispielsweise durch ein Polynom der Form

$$f(x) = a \cdot x + b \cdot x^2 + c \cdot x^3$$

beschrieben werden. Der Koeffizient $a$ ist dabei die lineare Verstärkung oder Abschwächung, b und c bestimmen das Sättigungsverhalten.

Üblicherweise werden zur Erzeugung des Beugungsgitters sinusförmige Schwingungen verwendet. Wird die zuvor dargestellte Kennlinie mit einer solchen Schwingung

beaufschlagt, entstehen zusätzlich zur Grundfrequenz der Schwingung zusätzliche Frequenzen bei Vielfachen der Grundfrequenz.

Werden mehrere Schwingungen (z.B. mit den Frequenzen $\omega_1$ und $\omega_2$ eingebracht, entstehen weitere Mischprodukte. Dies sind beispielsweise die bekannten Frequenzen $2\omega_1$-$\omega_2$ und $2\omega_2$-$\omega_1$.

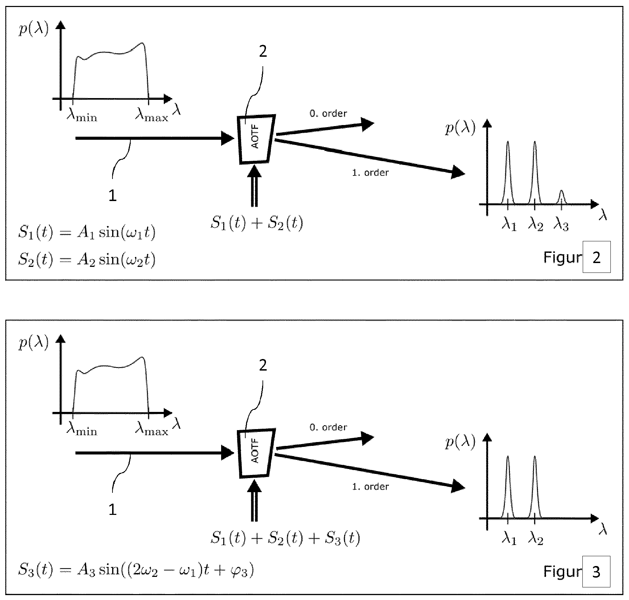

Figur 2 zeigt schematisch die Ablenkung eines Lichtstrahls mit einem kontinuierlichen Spektrum an einem akusto-optischen Filter.

Ein Graph am linken oberen Ende der Figur zeigt beispielhaft die Intensitätsverteilung des Spektrums des eingehenden Lichtstrahls 1. Dieser weist ein kontinuierliches Spektrum zwischen Amin und $\lambda_{max}$ auf. Dieser Lichtstrahl wird auf einen akusto-optischen Filter AOTF 2 gerichtet, der bzw. dessen akusto-optischer Kristall mit einem piezoelektrischen Wandler (in den Fig. 2 und 3 nicht gezeigt) in Schwingungen versetzt wird. Er wird dabei mit einer Kombination aus zwei Signalen $S_1$(t) = $A_1$sin($\omega_1$t) mit der Frequenz $\omega_1$ und $S_2$(t) = $A_2$sin($\omega_2$t) mit der Frequenz $\omega_2$ angeregt, um aus dem kontinuierlichen Spektrum zwischen Amin und $\lambda_{max}$ die zwei Wellenlängen $\lambda_1$ und $\lambda_2$ zu selektieren. Aufgrund der Nichtlinearität des piezoelektrischen Wandlers erscheint im gebeugten Lichtbündel allerdings auch die unerwünschte Wellenlänge $\lambda_3$.

Dies kommt durch problematische Mischfrequenzen zustande. So werden durch die Nichtlinearität auch Schwingungen bei Mischfrequenzen der beiden Grundfrequenzen angeregt wie z.B. $2\omega_1$-$\omega_2$ oder $3\omega_2$-$2\omega_1$ usw. Diese liegen sehr nah bei den Grundfrequenzen und beugen somit Licht im unmittelbaren Wellenlängenbereich der Grundfrequenzen, in diesem Fall Licht mit der Wellenlänge $\lambda_3$.

In Figur 3, die eine bevorzugtes Ausführungsform der Erfindung zeigt, wird der piezoelektrische Wandler nun neben der Kombination aus den zwei Signalen $S_1$(t) = $A_1$sin($\omega_1$t) mit der Frequenz $\omega_1$ und $S_2$(t) = $A_2$sin($\omega_2$t) mit der Frequenz $\omega_2$ zusätzlich mit einem Signal $S_3$(t) = $A_3$ sin(($2\omega_2$- $\omega_1$) t + $\varphi_3$) mit der Frequenz $2\omega_2$-$\omega_1$ und der Phase $\varphi_3$ angeregt.

Vorteilhafterweise führt dieses zusätzliche Signal nicht zu einer Verstärkung der Lichtleistung bei $\lambda_3$, sondern zu einer Verringerung oder gar Auslöschung, wenn die Amplitude $A_3$ und die Phasenlage $\varphi_3$ richtig gewählt werden. Dies könnte beispielsweise durch eine individuelle Kalibrierung bezüglich der Kennlinie des individuellen Anpassungsnetzwerks, des Transducers und des Kristalls erfolgen, wobei geeignete Ansteuersoftware zum Einsatz kommen kann, denn möglicherweise muss eine Kalibration an vielen Stützstellen (Kombinationen von Nutzfrequenzen und zugehörigen Amplituden und Phasen) durchgeführt werden. Weiterhin ist es auch denkbar, dass nicht bei jeder Frequenzkonstellation eine Kompensation notwendig wird. Die Amplituden der Störfrequenzen sind sehr unterschiedlich je nach Frequenzlage. Die Kompensation kann sich dann auf Mischfrequenzen beschränken, die sich als besonders störend herausstellen.

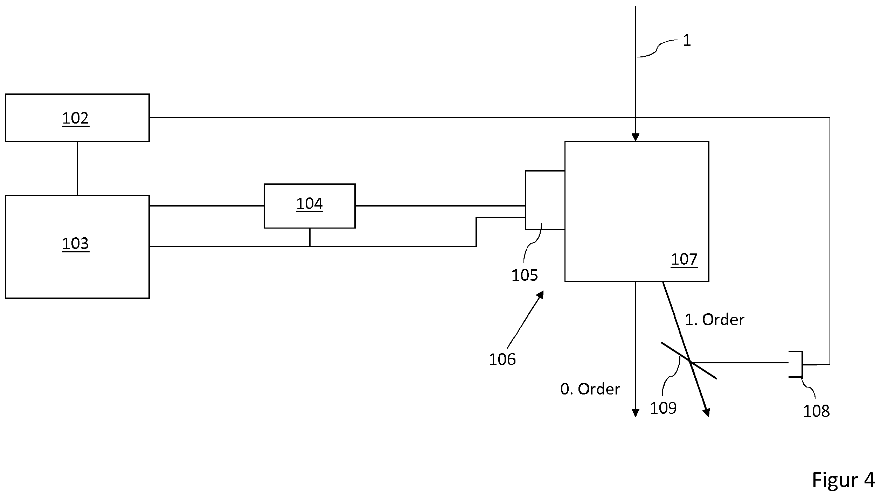

In Figur 4 ist schematisch eine Ausführungsform einer Vorrichtung zur Ansteuerung eines akustooptischen Elements gemäß einer bevorzugten Ausführungsform der Erfindung gezeigt. Die Vorrichtung umfasst einen Signalgenerator 103 und eine Steuereinrichtung 102, die den Signalgenerator 103 ansteuert. Der Signalgenerator 103 gibt ein Signal an ein akusto-optisches Element 106 ab, das einen piezoelektrischen Wandler 105 und einen akusto-optischen Kristall 107 aufweist. Dem piezoelektrischen Wandler 105 ist ein Anpassnetzwerk 104 vorgeschaltet, das eine Impedanz des piezoelektrischen Wandlers 105 an eine Impedanz des Signalgenerators 103 anpasst.

Die Steuereinrichtung 102 ist nun dazu eingerichtet, neben einer herkömmlichen Ansteuerung des piezoelektrischen Wandlers 105 mit z.B. einer Kombination aus sinusförmigen Signalen zusätzlich auch entsprechende Signale mit Mischfrequenzen auszugeben, um die aufgrund von Nichtlinearitäten entstehenden Anregungen zu kompensieren.

Grundsätzlich kann ein optisches Feedback vorgesehen sein, falls in der Steuereinrichtung automatisch ablaufende Verfahrensschritte des erfindungsgemäßen Verfahrens durchgeführt werden. Hierzu könnte beispielsweise der Detektor 108 vorgesehen sein, der mindestens eine Eigenschaft mindestens eines Teils des Lichts nachweist bzw. analysiert, das den akusto-optischen Kristall 107 durchläuft. Hierzu ist im Konkreten ein Strahlteiler 109 vorgesehen, der einen Teil des den akusto-optischen Kristall 107 durchlaufenden Lichts in Richtung des Detektors ablenkt. Der Detektor kann eine Photodiode und/oder einen Spektrometer aufweisen.

**Patentansprüche**

1. Verfahren zur Ansteuerung eines akusto-optischen Elements (106) mit einem akusto-optischen Kristall (107) und einem piezoelektrischen Wandler (105) zur Versetzung des akusto-optischen Kristalls (107) in mechanische Schwingungen, wobei der piezoelektrische Wandler (105) gleichzeitig mit wenigstens zwei verschiedenen Frequenzen angeregt wird, **dadurch gekennzeichnet, dass** der piezoelektrische Wandler (105) zusätzlich mit wenigstens einer Mischfrequenz aus den wenigstens zwei verschiedenen Frequenzen angeregt wird.

2. Verfahren nach Anspruch 1, wobei eine Amplitude der Anregung mit der wenigstens einen Mischfrequenz derart gewählt wird, dass sie genau oder im Wesentlichen einer Amplitude einer Schwingung in derselben wenigstens einen Mischfrequenz entspricht, in der der piezoelektrische Wandler (105) aufgrund einer Nichtlinearität angeregt wird.

3. Verfahren nach Anspruch 1 oder 2, wobei eine Phase der Anregung mit der wenigstens einen Mischfrequenz derart gewählt wird, dass mindestens ein störender Frequenzanteil kompensiert wird und/oder dass sie genau oder im Wesentlichen gegenphasig zu einer Schwingung in derselben wenigstens einen Mischfrequenz ist, in der der piezoelektrische Wandler (105) aufgrund einer Nichtlinearität angeregt wird.

4. Verfahren nach einem der vorstehenden Ansprüche, wobei der piezoelektrische Wandler (105) mit mehr als einer Mischfrequenz aus den wenigstens zwei verschiedenen Frequenzen angeregt wird.

5. Verfahren nach einem der vorstehenden Ansprüche, wobei der piezoelektrische Wandler (105) mit sämtlichen Mischfrequenzen innerhalb eines Bereiches von der Hälfte einer kleinsten der wenigstens zwei Frequenzen bis zum Doppelten einer größten der wenigstens zwei Frequenzen angeregt wird.

6. Verfahren nach einem der vorstehenden Ansprüche, wobei das akusto-optische Element (105) ausgewählt ist aus einem akusto-optisch abstimmbaren Filter, einem akusto-optischen Modulator, einem akusto-optischen Ablenker, einem akusto-optischen Strahlteiler und einem akusto-optischen Strahlvereiniger.

7. Vorrichtung zur Ansteuerung eines akusto-optischen Elements (106), mit:

   einem akusto-optischen Kristall (107);
   einem piezoelektrischen Wandler (105) zur Versetzung des akusto-optischen Kristalls (107) in mechanische Schwingungen;
   wenigstens einer Signalerzeugungseinrichtung (103), die dazu eingerichtet ist, den piezoelektrischen Wandler (105) mit wenigstens zwei Frequenzen anzuregen;
   **gekennzeichnet durch** wenigstens eine Steuereinrichtung (102), die dazu eingerichtet ist, die Signalerzeugungseinrichtung (103) derart anzusteuern, dass der piezoelektrische Wandler (105) zusätzlich mit wenigstens einer Mischfrequenz aus den wenigstens zwei verschiedenen Frequenzen angeregt wird.

8. Vorrichtung nach Anspruch 8, wobei zwischen piezoelektrischem Wandler (105) und der Signalerzeugungseinrichtung (103) ein Anpassungsnetzwerk (104) angeordnet ist, das eine Impedanz des piezoelektrischen Wandlers (105) in eine Impedanz transformiert, deren Realteil näher an einer Ausgangsimpedanz der Signalerzeugungseinrichtung (103) als der Realteil der Impedanz des piezoelektrischen Wandlers (103) ohne Anpassungsnetzwerk (104) liegt.

**9.** Vorrichtung nach Anspruch 8, wobei das Anpassungsnetzwerk (104) wenigstens eine Induktivität und/oder wenigstens eine Kapazität aufweist.

**10.** Vorrichtung nach einem der Ansprüche 7 bis 9, wobei die Steuereinrichtung (102) dazu eingerichtet ist, ein Verfahren nach einem der Ansprüche 1 bis 6 durchzuführen.

**11.** Mikroskop mit einer Vorrichtung nach einem der Ansprüche 7 bis 10.

Figur 1

EP 3 460 563 A1

Figur 2

Figur 3

Figur 4

**Europäisches Patentamt**
**European Patent Office**
**Office européen des brevets**

## EUROPÄISCHER RECHERCHENBERICHT

Nummer der Anmeldung

EP 18 19 2861

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 132 834 A (SHINADA HIDETOSHI [JP]) 21. Juli 1992 (1992-07-21) | 1,2,4, 6-11 | INV. G02F1/11 |
| A | * Spalten 3,4,7; Abbildung 3 * | 3,5 | G02F1/33 |
| | ----- | | |
| X | JP S54 128359 A (RICOH KK) 4. Oktober 1979 (1979-10-04) * Zusammenfassung * | 1,7 | |
| | ----- | | |
| A | US 2011/304900 A1 (WIDZGOWSKI BERND [DE] ET AL) 15. Dezember 2011 (2011-12-15) * Absatz [0056] * | 8,9 | |
| | ----- | | |
| A | US 2005/238276 A1 (KUMP JOHN [US]) 27. Oktober 2005 (2005-10-27) * Absatz [0005] * | 11 | |
| | ----- | | |
| A | US 4 799 777 A (EDOUARD BRIDOUX [FR] ET AL) 24. Januar 1989 (1989-01-24) * das ganze Dokument * | 1-11 | |
| | ----- | | |

RECHERCHIERTE SACHGEBIETE (IPC)

G02F

Der vorliegende Recherchenbericht wurde für alle Patentansprüche erstellt

| Recherchenort | Abschlußdatum der Recherche | Prüfer |
|---|---|---|
| Den Haag | 22. Januar 2019 | Aichmayr, Günther |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 18 19 2861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2019

| Im Recherchenbericht angeführtes Patentdokument | Datum der Veröffentlichung | Mitglied(er) der Patentfamilie | Datum der Veröffentlichung |
|---|---|---|---|
| US 5132834 A | 21-07-1992 | JP H041719 A<br>US 5132834 A | 07-01-1992<br>21-07-1992 |
| JP S54128359 A | 04-10-1979 | KEINE | |
| US 2011304900 A1 | 15-12-2011 | CN 103080820 A<br>EP 2580618 A1<br>JP 5934701 B2<br>JP 2013534643 A<br>US 2011304900 A1<br>WO 2011154501 A1 | 01-05-2013<br>17-04-2013<br>15-06-2016<br>05-09-2013<br>15-12-2011<br>15-12-2011 |
| US 2005238276 A1 | 27-10-2005 | US 2005238276 A1<br>WO 2005106578 A2 | 27-10-2005<br>10-11-2005 |
| US 4799777 A | 24-01-1989 | EP 0244279 A1<br>FR 2596877 A1<br>JP S6323129 A<br>US 4799777 A | 04-11-1987<br>09-10-1987<br>30-01-1988<br>24-01-1989 |

EPO FORM P0461

Für nähere Einzelheiten zu diesem Anhang : siehe Amtsblatt des Europäischen Patentamts, Nr.12/82